# EUROPEAN PATENT APPLICATION

(11) **EP 4 579 919 A1**
(43) Date of publication of application: **02.07.2025**
(21) Application number: 23900947.5
(22) Date of filing: 20.11.2023
(51) Int. Cl.: H01M 50/375, H01M 50/502, H01M 50/204

(54) **BATTERY MODULE AND BATTERY PACK INCLUDING SAME**

(30) Priority: 05.12.2022 KR 20220168018; 31.03.2023 KR 20230043133
(71) Applicant: LG Energy Solution, Ltd., Seoul 07335 (KR)
(72) Inventor: PARK, Jeong-Hoon, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2023/018641
(87) International publication number: WO 2024/122928

(57) **Abstract**

A battery module according to the present disclosure includes: a cell stack including stacked pouch-type battery cells; a bus-bar frame assembly configured to electrically connect the battery cells; a module case configured to accommodate the battery cells; and a venting guide member attached to a cell terrace of a pouch case heat-fused in the battery cell and configured to make a hole in the cell terrace.

## Description

### TECHNICAL FIELD

The present disclosure relates to a battery module and a battery pack including the same, and more specifically, it relates to a battery module with excellent safety against thermal events and a battery pack including the same.

The present application claims priority to Korean Patent Application No. 10-2022-0168018 filed on December 05, 2022 and Korean Patent Application No. 10-2023-0043133 filed on March 31, 2023 in the Republic of Korea, the disclosures of which are incorporated herein by reference.

### BACKGROUND ART

As technology development and demand for various mobile devices, electric vehicles, energy storage systems (ESSs), or the like significantly increase, interest in and demand for secondary batteries as an energy source are rapidly increasing. Although nickel-cadmium batteries or nickel-hydrogen batteries have conventionally been used widely as secondary batteries, nowadays, lithium secondary batteries are widely used because they have advantages of free charging and discharging due to almost no memory effect, a very low self-discharge rate, and a high energy density, compared to nickel-based secondary batteries.

These lithium secondary batteries generally use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

In general, secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

Currently, the operating voltage of one lithium secondary battery cell widely used is approximately 2.5V to 4.5V. Therefore, in the case of electric vehicles or power storage devices that require large capacity and high output, a battery module or battery pack is configured by connecting multiple lithium secondary batteries in series and/or parallel and used as an energy source. In particular, in order to satisfy the output or capacity required for electric vehicles, the battery module or battery pack includes a large number of lithium secondary batteries.

Meanwhile, if a thermal event occurs in a battery module containing multiple battery cells so that heat continues to be accumulated inside the battery module, thermal runaway may rapidly spread between the battery cells. This may lead to extensive damage such as explosion of the battery module.

Therefore, for user safety, the battery module or battery pack needs to be designed to suppress ignition or delay the spread thereof in the early stages of a thermal event.

As is widely known, the three elements of combustion are fuel, oxygen, and heat. The battery cell corresponding to the fuel among of them is almost impossible to remove when a thermal event occurs. Accordingly, in order to suppress a thermal event or delay the spread thereof, oxygen inflow into the battery module must be blocked or the heat source must be removed.

### DISCLOSURE

### Technical Problem

The present disclosure has been designed to solve the problems of the related art, and therefore the present disclosure is directed to providing a battery module capable of effectively dispersing or relieving heat and pressure before a thermal event intensifies in the battery module.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there may be provided a battery module including: a cell stack including stacked pouch-type battery cells; a bus-bar frame assembly configured to electrically connect the battery cells; a module case configured to accommodate the battery cells; and a venting guide member attached to a cell terrace of a pouch case heat-fused in the battery cell and configured to make a hole in the cell terrace.

The venting guide member may be configured to make a hole in the cell terrace of the battery cell when the temperature or internal pressure of the battery cell to which the venting guide member is attached exceeds a predetermined value.

The venting guide member may be a film heater configured to generate heat when the temperature or internal pressure of the battery cell to which the film heater is attached exceeds a predetermined value.

The film heater may be configured to stop generating heat if a hole is formed in the cell terrace.

The film heater may be attached to the cell terrace of each battery cell, and the film heater attached to a battery cell in contact with a specific battery cell in which thermal runaway occurs, among the battery cells, may be configured to generate heat.

The battery module may include a control unit configured to monitor a change in temperature or internal pressure of the battery cells and control the operation of the venting guide member.

The module case may have a gas venting hole provided on a bottom plate supporting the cell stack at the bottom of the cell stack.

The gas venting hole may be provided in the area below the cell terrace of the battery cell so as to correspond to the position thereof.

The battery module may further include a barrier member configured to partition the interior of the module case such that a predetermined number of battery cells are respectively located in the partitioned spaces inside the module case.

The barrier member may be configured in the form of a plate made of a material with flame retardancy and insulation properties and having a length and width corresponding to the length and height of the module case.

According to one aspect of the present disclosure, there may also be provided a battery pack including the battery module described above.

### Advantageous Effects

According to one aspect of the present disclosure, when a thermal event occurs inside the battery module, it is possible to effectively discharge or disperse heat and pressure of the battery cells, thereby preventing chain explosions of the battery cells. This may prevent flames from rapidly spreading inside and outside the battery module.

Additionally, according to another aspect of the present disclosure, venting gas generated from the battery cells may be directionally vented to the outside of the battery module, thereby relieving the internal pressure of the battery module more safely and effectively.

In addition, the present disclosure may have various other effects, and these will be described in the respective embodiments, or description of effects that may be easily inferred by those skilled in the art will be omitted.

### DESCRIPTION OF DRAWINGS

FIG. 1 is a perspective view schematically illustrating a battery module according to an embodiment of the present disclosure.
FIG. 2 is an exploded perspective view of the battery module in FIG. 1.
FIG. 3 is a diagram illustrating a portion of the battery module in FIG. 1 viewed from below after removing an end cover from the battery module.
FIG. 4 is a diagram illustrating a pouch-type battery cell according to an embodiment of the present disclosure.
FIG. 5 is a cross-sectional view schematically illustrating a battery module according to an embodiment of the present disclosure.
FIG. 6 is a diagram illustrating a portion of the battery module in FIG. 3 viewed at another angle after removing a bus-bar frame assembly from the battery module.
FIG. 7 is an enlarged view of area A in FIG. 6.
FIG. 8 is a partially cross-sectional view of a battery module according to another embodiment of the present disclosure.
FIG. 9 is a partially enlarged view of FIG. 8.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

The sizes of respective elements or specific parts of each element shown in the attached drawings are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

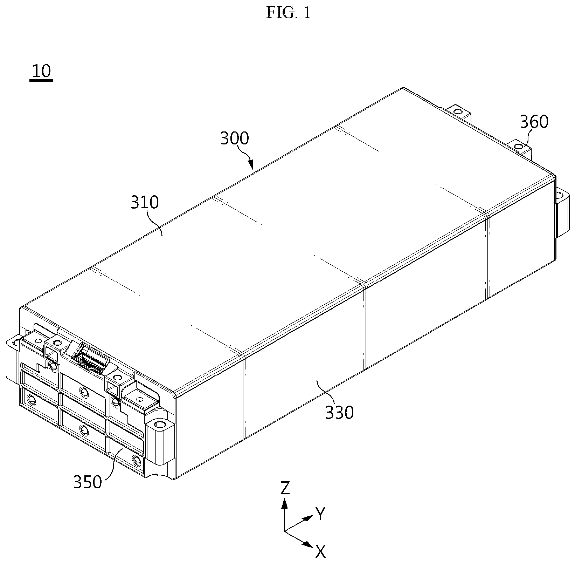

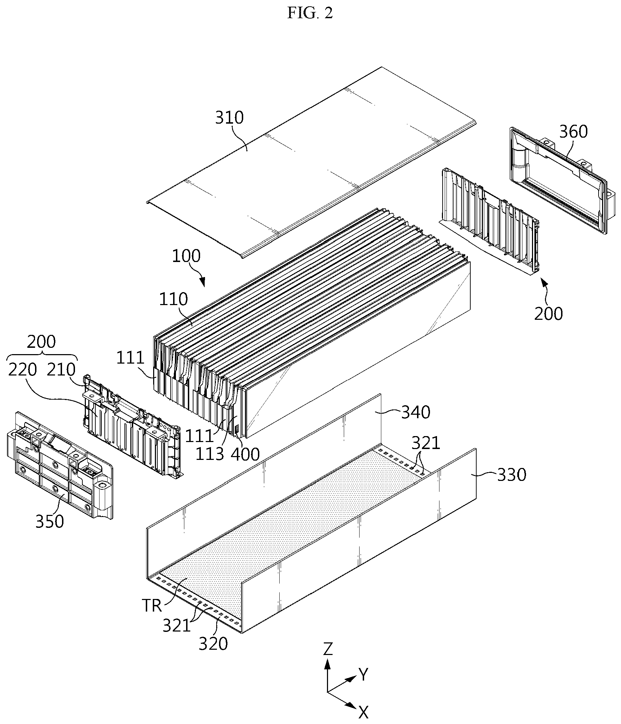

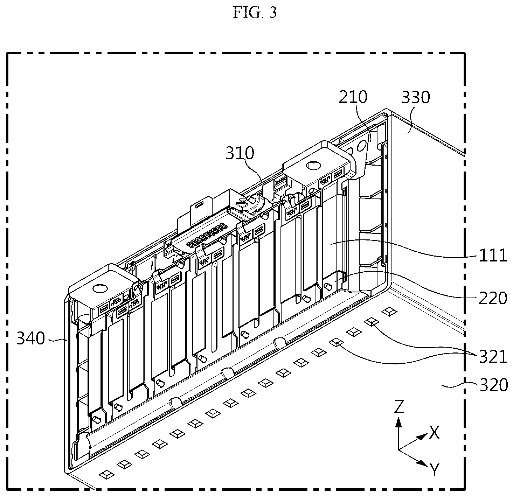

FIG. 1 is a perspective view schematically illustrating a battery module according to an embodiment of the present disclosure, FIG. 2 is an exploded perspective view of the battery module in FIG. 1, and FIG. 3 is a diagram illustrating a portion of the battery module in FIG. 1 viewed from below after removing an end cover from the battery module.

Referring to FIGS. 1 to 3, a battery module 10 according to an embodiment of the present disclosure includes a cell stack 100 comprised of battery cells 110, a bus-bar frame assembly 200, a module case 300, and a venting guide member 400.

The battery cell 110 is a pouch-type battery cell 110 and includes an electrode lead 111, an electrode assembly, an electrolyte, and a pouch case for sealing the electrode assembly and the electrolyte. For example, a pouch-type case may be comprised of two pouch sheets, and at least one of them may have a recess formed therein. An electrode assembly and an electrolyte are received inside the recess, and the edges of the two pouch sheets are heat-fused. In this pouch-type battery cell 110, a portion where the pouch sheets are heat-fused to be sealed is called a sealing portion. The electrode lead 111 has one end connected to the electrode assembly inside the pouch case and the other end protruding to the outside of the pouch case, and a portion between the one end and the other end is fixed into the sealing portion when the pouch sheets are heat-fused. A portion of the electrode lead 111 exposed to the outside of the pouch case may function as an electrode terminal of the pouch-type battery cell 110.

A pouch-type battery cell 110 obtained by packaging the electrode assembly using two pouch sheets may have four sealing portions (a front edge where the electrode lead 111 protrudes, a rear edge, and both side edges crossing the front and rear edges), and a pouch-type battery cell 110 obtained by packaging the electrode assembly by folding one pouch sheet may include three sealing portions (a front edge where the electrode lead 111 protrudes, a rear edge, and a side edge crossing the front and rear edges and positioned on the opposite side of the folded portion). Hereinafter, among the sealing portions, the sealing portion where the electrode lead 111 protrudes will be referred to as a cell terrace 113. In addition, the cell stack 100 indicates an element obtained by erecting the pouch-type battery cells 110 vertically with respect to the ground and stacking the same in the horizontal direction.

The bus-bar frame assembly 200 is a means for connecting the pouch-type battery cells 110 in series and/or parallel, and as shown in FIG. 2, may include a bus-bar frame 210 and a plurality of bus-bars 220 and may be disposed at the front and rear of the cell stack 100.

The bus-bar frame 210 may be configured in the form of a plate having a size capable of covering the front face (the -Y-axis direction) or rear face (the +Y-axis direction) of the cell stack 100. In addition, the bus-bar frame 210 may have a plurality of slits through which the electrode leads 111 of the pouch-type battery cells 110 pass in the +Y-axis or -Y-axis direction, and may be configured to enable a plurality of bus-bars 220 to be assembled to the outer surface thereof. In addition, the bus-bar frame 210 may be made of, for example, a plastic material to have electrical insulation properties.

The plurality of bus-bars 220 may be configured in the form of a bar made of an electrically conductive material, for example, metal such as copper, aluminum, or nickel. As shown in FIG. 3, the electrode leads 111 of the pouch-type battery cells 110 may pass through the slits of the bus-bar frame 210 to extend to the outside of the bus-bar frame 210, and the extended portion may be connected to the surface of the bus-bar 220 by welding. For example, the stacked pouch-type battery cells 110 may be connected in series and/or parallel to each other by connecting positive electrode leads of one or more pouch-type battery cells 110 and negative electrode leads of one or more other pouch-type battery cells 110 to the same bus-bar 220.

The module case 300 may be comprised of a case body configured in a square tube and a pair of end covers 350 and 360 that cover open ends of the case body. Referring to FIGS. 1 and 2, the case body may include a top plate 310 that covers the top face of the cell stack 100, a bottom plate 320 that covers the bottom face of the cell stack 100, and a pair of side plates 330 and 340 that covers both side faces of the cell stack 100, respectively.

Here, the bottom plate 320 and the pair of side plates 330 and 340 may be formed integrally. A unit in which the bottom plate 320 and the pair of side plates 330 and 340 are integrated is also referred to as a U-frame. The case body of this embodiment may be obtained by welding the U-frame and the top plate 310. Unlike this embodiment, the case body may also be provided by integrally configuring the top plate 310, the bottom plate 320, and the pair of side plates 330 and 340.

The cell stack 100 and the bus-bar frame assembly 200 may be disposed in the inner space of the case body, and the pair of end covers 350 and 360 may be respectively coupled to the open ends of the case body by welding or the like.

Thermal resin TR having adhesive properties may be applied between the bottom plate 320 and the cell stack 100. According to the above configuration, the fixation of the battery cells 110 within the module case may be strengthened. Additionally, a heat transfer rate between the battery cells 110 and the bottom plate 320 may be increased, so that the heat of the battery cells 110 may be more efficiently dissipated to the outside during charging and discharging.

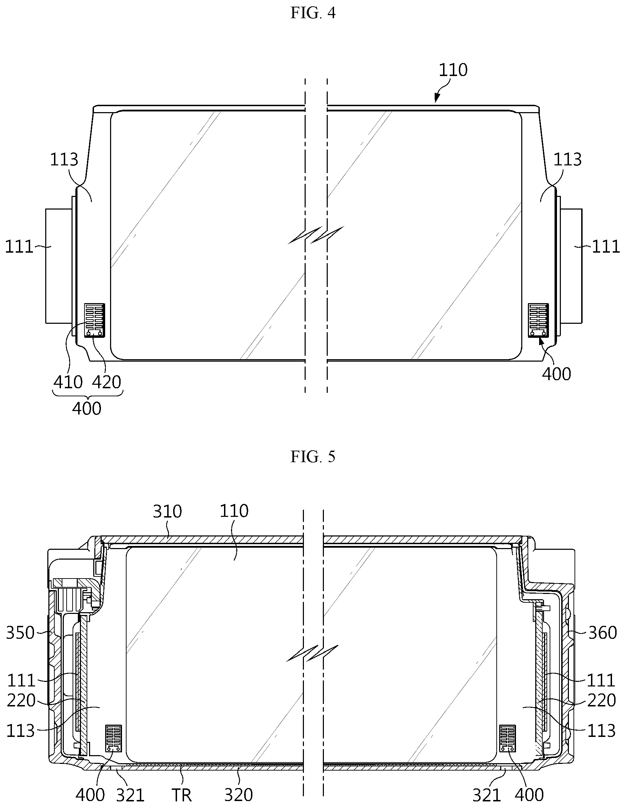

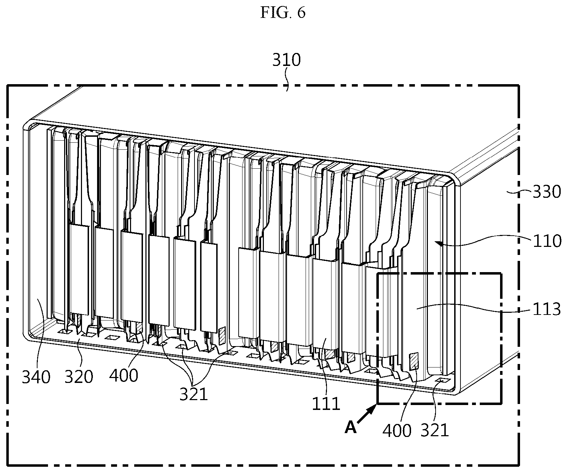

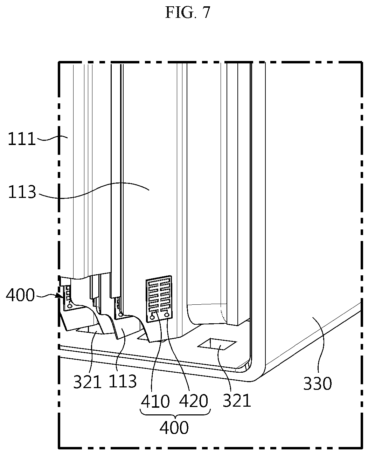

In addition, the bottom plate 320 may have a gas venting hole 321 formed thereon, as shown in FIGS. 2 and 3. In particular, the gas venting hole 321 may be provided in the area below the cell terrace 113 of the battery cell 110 so as to correspond to the position thereof, as shown in FIGS. 5 to 7.

Specifically, referring to FIGS. 2, 3, and 5 to 6, a plurality of gas venting holes 321 may be provided at positions close to both ends of the bottom plate 320 in the longitudinal direction (the Y-axis direction) to be spaced a predetermined distance apart from each other in the left/right direction (the X-axis direction). In addition, as shown in FIG. 2 or FIG. 5, the above-mentioned thermal resin TR is configured to be distributed on the bottom plate 320 only to the position adjacent to the gas venting holes 321 such that the gas venting holes 321 are not blocked. Preferably, the gas venting holes 321 are provided at the positions corresponding to the lower area of the cell terrace 113 (the front sealing portion or rear sealing portion) in the pouch-type battery cells 110.

Secondary batteries may generate gas due to a side reaction during charging and discharging. In particular, if a large amount of gas is generated during overcharging and discharging, the internal pressure rises significantly, resulting in a swelling phenomenon, and if this worsens, the bonding strength of the heat-fused sealing portion may be lowered, so that the corresponding portion may rupture and gas may be discharged. At this time, in the pouch-type battery cell 110, the sealing portion of the cell terrace 113 where the electrode lead 111 is bonded has a lower bonding force and a higher temperature than other sealing portions. Therefore, when the internal pressure of the pouch-type battery cell 110 increases, the cell terrace 113 is most likely to be damaged. Accordingly, the battery module 10 according to an embodiment of the present disclosure has gas venting holes 321 provided in the lower area of the cell terrace 113 corresponding to the position of the cell terrace 113 so as to enable the gas emitted due to damage to the cell terrace 113 to be discharged directly to the outside of the battery module 10.

According to the above configuration, for example, in a situation where high-temperature gas or the like is ejected from a trigger battery cell 110 in which a thermal event has occurred, among the battery cells 110, the high-temperature gas or the like may be discharged in the downward direction of the module case 300 through the gas venting holes 321. In this case, other battery cells 110 adjacent to the trigger battery cell 110 may be prevented from being significantly damaged by heat. That is, heat energy propagation may be delayed between the battery cells 110. Additionally, a large amount of gas may be quickly discharged to the outside of the battery module 10, thereby preventing explosion or collapse due to a rapid increase in the internal pressure of the battery module 10.

The battery module 10 according to an embodiment of the present disclosure includes, as shown in FIGS. 4 and 5, a venting guide member 400 that is attached to the cell terrace 113 of the battery cell 110 and, if the temperature or internal pressure of the battery cell 110 exceeds a predetermined value, makes a hole in the cell terrace 113 of the battery cell 110. That is, the battery module 10 is configured such that when thermal abnormality is detected in the battery cell 110, the venting guide member 400 makes a hole in the cell terrace 113 of the battery cell 110, so that gas and heat energy may exit early from the inside of the battery cell 110.

To elaborate, if gas, flame, particles, or the like are explosively emitted from the battery cell 110 where a thermal event occurs under high temperature and high pressure conditions, other battery cells 110 around the battery cell 110 may be thermally damaged extensively. The venting guide member 400 is a means to prevent this situation and serves to discharge gas or heat energy from the battery cell 110 in advance at low temperature and low pressure.

The venting guide member 400 operates when thermal abnormality is detected in the battery cell 110. The thermal abnormality of the battery cell 110 may be determined whether or not the temperature or internal pressure of the battery cell 110 exceeds a predetermined value. Here, the predetermined value may indicate the highest value within a normal range of temperature or internal pressure of the battery cell 110 when charging and discharging the battery cell 110. The predetermined value may be configured to be lower than the temperature or internal pressure at which the battery cell 110 is to explode. For reference, the predetermined value may be determined differently depending on the capacity or size of the battery cell 110 included in the battery module 10.

As described above, when thermal abnormality is detected in the battery cell 110, the venting guide member 400 may operate to make a hole in the cell terrace 113, and heat energy including gas may be dissipated slowly while the battery cell 110 remains at a relatively low temperature and low pressure. As a result, explosion of the trigger battery cell 110 may be prevented, and thermal damage to other battery cells 110 adjacent to the trigger battery cell 110 may be significantly reduced.

In this embodiment, a film heater may be employed as the venting guide member 400. The film heater may include a resistance pattern 410 and an insulating film 420. For example, the film heater may be configured as an insulating film 420 on which a resistance pattern 410 is printed using conductive ink. Here, the insulating film 420 may be a PET film or a PI film.

Specifically, the film heater may be manufactured by printing a resistance pattern 410 with Ag nano ink on a base film, attaching a cover lay film thereto, and then drying the same by heat. Although shown schematically for convenience of drawing, a wire may be connected to the film heater, and current may be supplied to the resistance pattern 410 of the film heater through the wire. Meanwhile, in the case of the present embodiment, although a film heater is employed as the venting guide member 400, any mechanical or electronic configuration as long as it is able to make a hole in the cell terrace 113 may be applied as the venting guide member 400.

The film heater may preferably be attached to each battery cell 110. For example, as shown in FIG. 4, the film heater may be attached to the lower areas of the cell terraces 113 on both sides of the battery cell 110 where the electrode leads 111 protrude. If the battery cells 110 having the film heaters attached thereto are stacked and stored in the module case 300, the gas venting holes 321 are located in the area below the film heater, as shown in FIGS. 5 to 7. According to this configuration, if thermal abnormality is detected in the battery cell 110, the film heater may generate heat to make a hole in the cell terrace 113 of the battery cell 110, and gas or the like may vent through the hole so that the venting gas or the like may be discharged in the downward direction of the bottom plate 320 through the gas venting holes 321 located immediately below the same, thereby performing directional venting. Therefore, the path through which the gas or the like is discharged to the outside of the battery module 10 may be significantly shortened, so the gas may not spread into the inner space of the module case 300.

The venting guide member 400 may be configured to be operated by a control unit (not shown). Hereinafter, control of the venting guide member 400 by the control unit will be described. However, unlike this embodiment, it should be noted that the venting guide member 400 may be configured to include a sensor capable of detecting the temperature or pressure of the battery cell 110, detect abnormality of the battery cell 110 by itself, and operate in conjunction with the sensor.

That is, the battery module 10 according to an embodiment of the present disclosure may further include a control unit (not shown). The control unit may be configured to be integrated into a battery management system (BMS), which is a general element included in the battery module 10, and may be provided inside or outside the module case 300.

The control unit may be configured to measure, calculate, receive, or control various electrical, physical, and chemical characteristics of the battery cell 110 or its surrounding environment. For example, the control unit may measure, calculate, or control the voltage, current, temperature, state of charge (SOC), state of health (SOH), internal resistance, or the like of the battery cells 110.

Additionally, the control unit may be configured to monitor a change in temperature or internal pressure of the pouch-type battery cell 110 and transmit an operation signal to the venting guide member 400. The control unit may be configured to monitor abnormality of the battery cell 110 and, if the temperature or internal pressure of the battery cell 110 falls outside of a normal range, control the venting guide member 400 to operate.

For example, if the temperature or internal pressure of all monitored battery cells 110 falls within the normal range, the control unit cuts off the power supplied to all film heaters. However, if the temperature or internal pressure of a specific battery cell 110 falls outside of the normal range or remains out of the normal range for a predetermined period of time without returning thereto, the control unit controls power to be supplied to the film heater attached to the specific battery cell 110, that is, the trigger battery cell 110. Then, the film heater generates heat to make a hole in the cell terrace 113 of the trigger battery cell 110.

If the hole is formed in the cell terrace 113, the film heater may stop generating heat. For example, the time taken from when the film heater starts to operate until the hole is formed in the cell terrace 113 is predetermined as an operation time through experiments or the like. Based on the determined operation time, the control unit may cut off the power supplied to the film heater if the operation time elapses so that the film heater stops generating heat.

Meanwhile, unlike the present embodiment, an electronic circuit switch with a timer function will be built into the film heater such that power is supplied only during the operation time so that the film heater generates heat and so that the heat generation stops when the hole is formed in the cell terrace 113. Alternatively, a film heater in which the cross-sectional area of the resistance pattern 410 is designed such that the resistance pattern 410 breaks when the cell terrace 113 reaches a melting temperature may be employed.

According to the above-described implementation configuration, the film heater may generate heat only enough to form a hole in the cell terrace 113, thereby preventing the battery cell 110 from igniting due to continuous heat generation of the film heater.

Additionally, the battery module 10 according to an embodiment of the present disclosure may be configured to operate a film heater attached to a battery cell 110 adjacent to the trigger battery cell 110. In other words, among the battery cells 110 stored in the module case 300, the film heater of a specific battery cell 110 in which thermal runaway occurs or gas is emitted and the film heater of a battery cell 110 having one side in contact with the battery cell 110 may be configured to operate. Here, the battery cell 110 in contact with the specific battery cell 110 may be configured such that the film heater attached thereto operates even if the temperature and pressure are normal.

For example, since the control unit monitors the temperature and pressure of respective battery cells 110, the positions of the ignited battery cell 110 and the battery cell 110 in contact with the same may be identified. Accordingly, the operation of the film heaters attached to the battery cell 110 in contact with the ignited battery cell 110 may be controlled by the control unit.

According to the above-described implementation configuration, a hole is to be formed in advance on the cell terrace 113 of the battery cell 110 adj acent to the trigger battery cell 110 that is in the state of severe deterioration or has already ignited. In this case, even if the heat transfers from the trigger battery cell 110 to the adjacent battery cell 110, gas or the like may be discharged slowly through the hole formed in advance on the cell terrace 113 of the adjacent battery cell 110 under low temperature and low pressure. Therefore, this implemented configuration gives the effect of preventing chain explosions of the battery cells 110.

As described above, according to the configuration and operation of the battery module 10 according to the present disclosure described above, when a thermal event occurs inside the battery module 10, the heat and pressure of the battery cells 110 may be effectively dispersed and discharged to the outside. Accordingly, chain explosion of the battery cells 110 may be prevented.

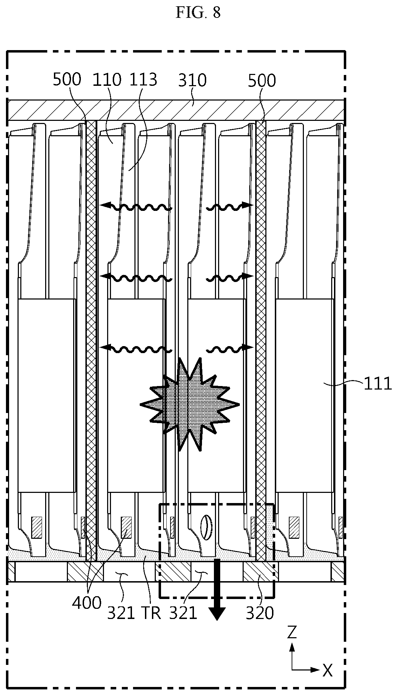

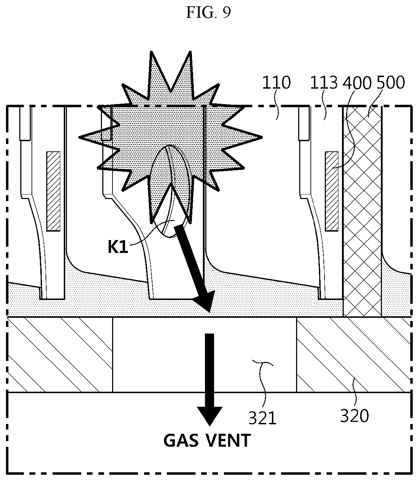

FIG. 8 is a partially cross-sectional view of a battery module 10 according to another embodiment of the present disclosure, and FIG. 9 is a partially enlarged view of FIG. 8.

Next, a battery module 10 according to another embodiment of the present disclosure will be described with reference to FIGS. 8 and 9. The same reference numerals as those in the above-described embodiment indicate the same elements, and redundant descriptions of the same elements will be omitted, and a description will be made based on the differences from the above-described embodiment.

Compared to the battery module 10 according to the above-described embodiment, the battery module 10 according to another embodiment of the present disclosure further includes a barrier member 500 that partitions the interior of the module case 300 such that a predetermined number of battery cells 110 are respectively located in the partitioned spaces inside the module case 300.

The barrier member 500 may be configured in the form of a plate made of an insulating material, and may be provided as a pre-assembled form inside the module case 300, or may be installed between specific battery cells 110 when stacking the battery cells 110.

The barrier member 500 may be provided in the form of a plate having a length and width corresponding to the length and height of the module case 300. In FIG. 8, the lower end of this barrier member may come into contact with the bottom plate 320 and the upper end thereof may come into contact with the top plate 310. In addition, the barrier member 500 may be made of a material with flame retardancy and insulation properties, such as mica, to block heat transfer between the battery cells 110 and prevent the movement of flame or gas inside the module case 300.

Specifically, referring to FIG. 8, when a specific battery cell 110 undergoes thermal runaway, heat may spread from the specific battery cell 110 to several surrounding battery cells 110. However, heat would not be easily transmitted to the battery cell 110 disposed in another space partitioned by the barrier member 500.

In addition, before the specific battery cell 110 reaches high temperature and high pressure, as shown in FIG. 9, a hole K1 may be formed on the cell terrace 113 of the specific battery cell by the venting guide member 400, so that gas or particles may be emitted through the hole K1. At this time, the emitted gas is blocked from moving to the battery cells 110 disposed in other partitioned spaces by the barrier member 500. The blocked gas may be discharged in the downward direction of the battery module 10 for directional venting through the gas venting hole 321 located below the cell terrace 113 of the specific battery cell 110. Therefore, even if a thermal event occurs in the specific battery cell 110, thermal damage to the surrounding battery cells 110 may be minimized, thereby significantly delaying the propagation of thermal runaway between the battery cells 110.

Meanwhile, a battery pack according to the present disclosure may include one or more battery modules described above. Additionally, the battery pack according to the present disclosure may be applied to vehicles such as electric vehicles. In other words, the vehicle according to the present disclosure may include at least one or more battery packs according to the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

Meanwhile, although terms indicating directions such as upward, downward, left, right, forward, and backward are used in this specification, it is obvious to those skilled in the art that these terms are only for convenience of explanation and may vary depending on the location of the target object or the location of the observer.

## Claims

1. A battery module comprising:
a cell stack comprising stacked pouch-type battery cells;
a bus-bar frame assembly configured to electrically connect the battery cells;
a module case configured to accommodate the battery cells; and
a venting guide member attached to a cell terrace of a pouch case heat-fused in the battery cell and configured to make a hole in the cell terrace.

2. The battery module according to claim 1,
wherein the venting guide member is configured to make a hole in the cell terrace of the battery cell when the temperature or internal pressure of the battery cell to which the venting guide member is attached exceeds a predetermined value.

3. The battery module according to claim 1,
wherein the venting guide member is a film heater configured to generate heat when the temperature or internal pressure of the battery cell to which the film heater is attached exceeds a predetermined value.

4. The battery module according to claim 3,
wherein the film heater is
configured to stop generating heat if a hole is formed in the cell terrace.

5. The battery module according to claim 3,
wherein the film heater is attached to the cell terrace of each battery cell, and
wherein the film heater attached to a battery cell in contact with a specific battery cell in which thermal runaway occurs, among the battery cells, is configured to generate heat.

6. The battery module according to claim 1,
comprising a control unit configured to monitor a change in temperature or internal pressure of the battery cells and control the operation of the venting guide member.

7. The battery module according to claim 1,
wherein the module case has
a gas venting hole provided on a bottom plate supporting the cell stack at the bottom of the cell stack.

8. The battery module according to claim 7,
wherein the gas venting hole is
provided in the area below the cell terrace of the battery cell so as to correspond to the position thereof.

9. The battery module according to claim 1,
further comprising a barrier member configured to partition the interior of the module case such that a predetermined number of battery cells are respectively located in the partitioned spaces inside the module case.

10. The battery module according to claim 9,
wherein the barrier member is
configured in the form of a plate made of a material with flame retardancy and insulation properties and having a length and width corresponding to the length and height of the module case.

11. A battery pack comprising the battery module according to any one of claims 1 to 10.
